# FASCICULE DE BREVET EUROPEEN

(11) **EP 4 069 582 B1**
(45) Date de publication et mention de la délivrance du brevet: **10.01.2024**
(21) Numéro de dépôt: 20817237.9
(22) Date de dépôt: 30.11.2020
(51) Int. Cl.: B64C 1/14

(54) **PORTE DE CABINE PRESURISEE D'AERONEF A STRUCTURE FORMEE DE POUTRES A SECTION EVOLUTIVE**
FLUGZEUGDRUCKKABINENTÜR MIT EINER STRUKTUR; DIE AUS TRÄGERN MIT UNTERSCHIEDLICHEM QUERSCHNITT GEBILDET IST
AIRCRAFT PRESSURIZED CABIN DOOR WITH A STRUCTURE FORMED BY BEAMS HAVING A VARYING CROSS-SECTION

(30) Priorité: 02.12.2019 FR 1913588
(43) Date de publication de la demande: 12.10.2022
(73) Titulaire: Latecoere, 31500 Toulouse (FR)
(72) Inventeur: KLISKY, Miloslav, 18200 PRAHA 8 (CZ); BORLOT, Jean Michel, 81500 Teulat (FR); KRENA, Josef, 28922 Lysa Nad Labem (CZ)
(74) Mandataire: Junca, Eric
(86) Numéro de dépôt international: PCT/EP2020/083831
(87) Numéro de publication internationale: WO 2021/110569

(56) Documents cités:
- FR-A1- 2 888 816
- US-A1- 2009 078 826
- US-A1- 2014 186 572

## Description

### DOMAINE TECHNIQUE

L'invention a trait au domaine de l'aéronautique et concerne une porte de cabine pressurisée d'aéronef.

Les aéronefs, et en particulier les avions, sont généralement équipés de portes permettant aux personnes et au matériel d'entrer et de sortir de la cabine. La cabine étant pressurisée, ces portes doivent garantir, durant le vol, la fermeture de la cabine et le maintien d'une importante différence de pression entre l'intérieur de la cabine et l'extérieur. Les portes de cabine pressurisée comportent pour cela un panneau extérieur, également dénommé « peau », qui, lorsque la porte est fermée, se place dans la continuité du fuselage de l'aéronef et qui agit comme une barrière pour le maintien de la différence de pression. Pour que ce panneau extérieur puisse présenter une épaisseur acceptable malgré les importantes contraintes dues à la différence de pression, la porte comporte également une structure de porte formée de poutres fixées sur le panneau extérieur pour assurer la rigidité de ce dernier.

Par ailleurs, les portes de cabine sont aussi généralement le support de divers équipements tels que des mécanismes d'ouverture de porte ou des équipements de confort et de sécurité. La structure de porte, en plus d'assurer la rigidité de la porte, doit également être dimensionnée pour supporter ces masses supplémentaires.

Les portes de cabine pressurisée sont un élément critique de la sécurité d'un aéronef, car elles sont garantes du maintien de la pression à l'intérieur de la cabine. Les panneaux de porte et les structures de porte associées sont donc dimensionnés pour un haut niveau de sécurité. Cependant, la masse de la structure de porte, et de la porte en général, gagne à être réduite pour des raisons de cout de production et de légèreté de l'aéronef pour permettre notamment des économies de carburant.

### ART ANTÉRIEUR

La demande de brevet FR2928620 décrit une porte de cabine d'avion dont la structure de porte comprend des poutres transversales et des longerons se croisant pour former une structure rigide. Les poutres transversales et les longerons sont des profilés de type IPN. Dans l'exemple décrit par ce document, quatre longerons et six poutres transversales se croisent à angle droit et sont fixés les uns aux autres, formant ainsi une structure d'une grande rigidité.

Une telle structure de porte est difficile et coûteuse à fabriquer en raison notamment des liaisons à réaliser au niveau des croisements entre les longerons et les poutres transversales. Ces liaisons requièrent des fixations, des pièces supplémentaires ou des liaisons complexes et entraine aussi des augmentations de masse.

Par ailleurs, le croisement entre les poutres transversales et les longerons rend difficile la fabrication de cette porte en matériaux composites pour lesquels la réalisation de telles intersections génère une difficulté supplémentaire en assemblage ou en moulage.

La demande de brevet US2007007390 se propose de résoudre certains des inconvénients indiqués ci-dessus en proposant une porte d'avion monolithique réalisée d'une pièce. De fortes nervures de renfort se croisent à angle droit sur toute la surface interne de la porte. Une telle porte présente également une rigidité conséquente, propre à son utilisation en aéronautique, mais reste d'une complexité et d'un cout de réalisation important. Sa masse est également conséquente.

La demande de brevet US2009/0078826 décrit une porte de cabine pressurisée réalisée en matériaux composites et dont la conception est optimisée pour l'usage de ces matériaux composites. La porte comprend des poutres disposées à angle droit les unes des autres mais ne se croisant pas. Le procédé de fabrication d'une telle porte est simplifié par rapport aux procédés évoqués ci-dessus et la réalisation en matériaux composites est facilitée. Cependant, le support de la peau d'une telle porte est inférieur à celui des structures de porte à poutres croisées.

### EXPOSÉ DE L'INVENTION

L'invention vise à améliorer les portes de cabine pressurisée d'aéronef, en proposant une telle porte qui allie une importante rigidité permettant son emploi pour des aéronefs volant en altitude, à une simplicité de réalisation qui permet une fabrication rapide et à moindre cout, et qui permet sa réalisation par tout procédé et matériaux, incluant les matériaux composites.

À cet effet, l'invention vise une porte de cabine pressurisée d'aéronef, comportant un panneau extérieur et une structure de porte. La structure de porte comprend :
- deux poutres circonférentielles fixées sur les rebords latéraux de la porte ;
- une pluralité de poutres longitudinales disposées sensiblement perpendiculairement entre les poutres circonférentielles et fixées sur le panneau extérieur, chaque poutre longitudinale s'étendant d'une poutre circonférentielle à l'autre, et chaque poutre longitudinale comportant : une première extrémité venant au contact de l'une des poutres circonférentielles ; et une seconde extrémité qui vient au contact de l'autre poutre circonférentielle ;

De plus, chaque poutre longitudinale est un profilé ouvert dont l'ouverture est tournée vers le panneau extérieur, cette ouverture étant close par la face interne du panneau extérieur sur laquelle est fixée la poutre longitudinale, au moins une poutre longitudinale étant une poutre longitudinale à section variable présentant, selon deux directions perpendiculaires à la direction dans laquelle s'étend la poutre longitudinale, une section en augmentation des extrémités de la poutre vers le milieu de la poutre, la poutre longitudinale à section variable présentant deux barres d'appui fixées sur le panneau extérieur, ces barres d'appui s'étendant sur toute la longueur de la poutre longitudinale, de part et d'autre de ladite ouverture, ces deux barres d'appui étant recourbées et présentant chacune une concavité tournée vers la concavité de l'autre barre d'appui.

Dans la présente description et dans les revendications, l'adjectif « longitudinal » fait référence à la direction longitudinale du fuselage de l'aéronef. Les poutres longitudinales sont donc des poutres s'étendant sur la porte parallèlement à l'axe longitudinal dans lequel s'étend le fuselage de l'aéronef. De même, l'adjectif « circonférentiel » fait référence à la circonférence du fuselage de l'aéronef. Les poutres circonférentielles sont donc des poutres qui s'étendent suivant un cercle relatif à une section du fuselage de l'aéronef. De même, la face interne du panneau extérieur désigne la face qui est du côté de la cabine, par opposition à la face externe du panneau extérieur qui est tournée vers l'extérieur.

Dans la présente description et dans les revendications, la notion de section de la poutre longitudinale est définie précisément comme l'aire d'une surface qui est délimitée par les contours de la poutre, dans un plan de section perpendiculaire à la direction dans laquelle s'étend la poutre. Par exemple, si la poutre longitudinale est constituée d'un profilé qui est un cylindre à base trapézoïdale, la section de la poutre en un point donné est l'aire du trapèze dans le plan de section en ce point.

Une telle porte présente une importante rigidité sans avoir recours à des poutres se croisant. Les poutres qui sont agencées transversalement les unes aux autres viennent en contact, les extrémités d'une poutre contre le flanc d'une autre poutre, sans croisement. Les jonctions entre poutres sont ainsi simplifiées et l'assemblage de poutres réalisées au préalable est simplifié. Cette disposition est particulièrement propice à la réalisation en matériaux composites.

L'invention permet par ailleurs l'emploi de plusieurs techniques de fabrication, différents matériaux et techniques de mise en oeuvre pouvant être employés pour la même porte. La simplicité de la conception permet de mettre en oeuvre efficacement la majorité des techniques utilisées dans la construction aéronautique, et une telle porte peut-être réalisée par des technologies qui seraient trop complexes pour être envisagées avec une structure à poutre croisée. La forme des poutres à section variable, notamment, est démoulable et facilement réalisable en composite.

Malgré sa simplicité d'assemblage, la porte présente une grande rigidité permettant au panneau extérieur de maintenir d'importantes différences de pression entre l'intérieur et l'extérieur de la cabine.

Chacune des poutres longitudinales présente deux lignes d'appui, de part et d'autre de l'ouverture de son profil, pour la fixation du panneau extérieur. Une poutre longitudinale procure deux zones de maintien, parallèles et espacées, pour toute la largeur du panneau extérieur.

Par ailleurs, le fait qu'au moins une poutre longitudinale présente, selon deux directions perpendiculaires, une section en augmentation des extrémités de la poutre vers le milieu de la poutre, procure à cette structure une section évolutive procurant un renforcement du soutien du panneau extérieur. Les inventeurs ont en effet déterminé qu'une telle augmentation continue de la section de la poutre permet de diminuer de manière très importante les cloques se formant en altitude sur le panneau extérieur sous l'effet de la pressurisation de la cabine. Ces phénomènes de cloques conduisent généralement à augmenter l'épaisseur du panneau extérieur afin de réduire la profondeur des cloques et ainsi ne pas pénaliser la trainée aérodynamique de l'aéronef. L'invention permet au contraire de réduire l'épaisseur du panneau extérieur tout en améliorant la raideur du panneau extérieur et en diminuant sa propension à présenter des cloques. Une porte à cout réduit et plus légère, et favorisant donc l'économie de carburant de l'aéronef, est ainsi obtenue.

La porte d'aéronef selon l'invention peut comporter les caractéristiques additionnelles suivantes, seules ou en combinaison :
- la poutre longitudinale à section variable comporte deux parois de flanc s'étendant obliquement l'une vers l'autre à partir des deux barres d'appui, ces deux parois de flanc étant recourbées et présentant chacune une concavité tournée vers la concavité de l'autre paroi de flanc ;
- chaque barre d'appui est constituée par un pli d'une des parois de flanc ;
- la poutre longitudinale à section variable comporte une paroi de sommet, opposée aux barres d'appui, dont la largeur, mesurée dans un plan perpendiculaire à l'axe longitudinal de la poutre, est inférieure ou égale à la distance minimale séparant les deux barres d'appui ;
- la paroi de sommet est une surface recourbée dont la concavité est tournée vers le panneau extérieur ;
- la structure de porte comprend un cadre formé des poutres circonférentielles et de deux poutres longitudinales situées aux extrémités des poutres circonférentielles ;
- la poutre longitudinale à section variable présente une dimension en augmentation des extrémités de la poutre vers le milieu de la poutre, selon les deux directions perpendiculaires à la direction dans laquelle s'étend la poutre longitudinale.

### PRÉSENTATION DES FIGURES

D'autres caractéristiques et avantages de l'invention ressortiront de la description non limitative qui suit, en référence aux dessins annexés dans lesquels :
- La figure 1 représente une porte d'aéronef selon l'invention vue en perspective ;
- La figure 2 représente la porte de la figure 1 vue de profil en coupe ;
- la figure 3 représente en perspective des poutres à section évolutive de la porte de la figure 1 ;
- La figure 4 représente les poutres de la figure 3 vues de dessus ;
- La figure 5 est similaire à la figure 3 pour une variante de réalisation.

### DESCRIPTION DÉTAILLÉE

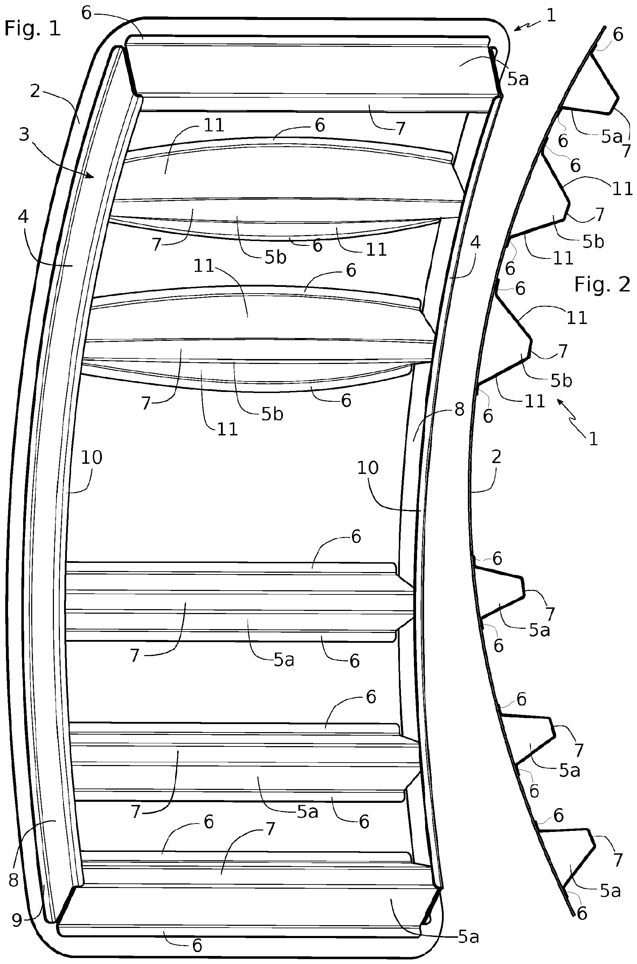

La figure 1 illustre en perspective une porte 1 de cabine pressurisée d'aéronef. Dans le présent exemple, cette porte 1 est destinée à fermer une ouverture correspondante pratiquée dans le fuselage d'un avion. La porte 1 peut s'ouvrir lorsque l'avion est au sol pour permettre l'entrée et la sortie de passagers, pour constituer une sortie de secours, une trappe d'accès aux soutes, ou tout autre panneau ouvrant pour avion. La porte 1 de cabine est associée de manière classique à des mécanismes de charnière, de commandes d'ouverture et de fermeture, ainsi qu'à des dispositifs d'étanchéité et de sécurité (non représentés).

La porte 1 de cabine comprend un panneau extérieur 2 et une structure 3 de porte qui renforce la tenue du panneau extérieur 2. Lorsque la porte 1 de cabine est fermée, le panneau extérieur 2 constitue la surface externe de l'avion, dans le prolongement du fuselage. Le panneau extérieur 2 peut être par exemple réalisé à partir d'une tôle d'aluminium de 2 à 5 millimètres d'épaisseur. Dans le présent exemple, le panneau extérieur 2 présente une courbure (voir figure 2) qui suit la forme du fuselage de l'avion dont la section est généralement sensiblement circulaire ou à double courbure.

La structure 3 de porte est fixée sur la partie interne du panneau extérieur 2, c'est-à-dire du côté de l'intérieur de la cabine de l'avion. La structure 3 de porte comprend deux poutres circonférentielles 4 qui sont fixées au panneau extérieur 2 sur les rebords latéraux de la porte 1. Les poutres circonférentielles 4 suivent la courbure circonférentielle du panneau extérieur 2, et plus généralement du fuselage de l'avion. Dans l'exemple décrit, les poutres circonférentielles 4 sont des poutres verticales (en référence à la position représentée à la figure 1), chacune étant fixée à proximité d'un rebord latéral du panneau extérieur 2.

La structure 3 de porte comprend également une pluralité de poutres longitudinales 5a, 5b qui s'étendent dans la direction longitudinale du fuselage de l'avion c'est-à-dire, en référence à la position de la figure 1, sensiblement horizontalement. Chaque poutre longitudinale 5a, 5b comporte une première extrémité venant au contact de l'une des poutres circonférentielles 4, et comporte une seconde extrémité qui vient au contact de l'autre poutre circonférentielle 4. Chaque poutre longitudinale 5a, 5b s'étend ainsi perpendiculairement aux poutres circonférentielles 4, d'une poutre circonférentielle 4 à l'autre. En variante, chaque poutre longitudinale 5a, 5b s'étend simplement transversalement aux poutres circonférentielles 4 car, dans certain cas, la porte 1 est montée dans des zones évolutives ou les poutres longitudinales ne sont pas perpendiculaires aux poutres circonférentielles.

Les poutres longitudinales 5a, 5b sont des profilés présentant chacun deux barres d'appui 6 qui sont fixées sur le panneau extérieur 2 suivant toute la longueur de la poutre longitudinale 5a, 5b correspondante. Chacune des poutres longitudinales 5a, 5b comporte une paroi de sommet 7, opposée aux barres d'appui 6. Pour chaque poutre 5a, 5b, la paroi de sommet 7 rejoint les barres d'appui par des parois de flanc 11.

Les poutres circonférentielles 4 comportent chacune une âme 8 constituée d'une paroi unique s'étendant perpendiculairement à la surface du panneau extérieur 2. Chaque poutre circonférentielle 4 comporte de plus une semelle de fixation 9, pour sa fixation au panneau extérieur 2, et un rebord de renfort 10 qui peut être fixé sur la paroi de sommet 7 de chaque poutre longitudinale 5a, 5b qui vient au contact de la poutre circonférentielle 4 considérée.

La semelle de fixation 9 et le rebord de renfort 10 peuvent être constitués par des plis de l'âme de la poutre circonférentielle 4.

Les deux poutres circonférentielles 4 et les deux poutres longitudinales 5a d'extrémité supérieure et d'extrémité inférieure de la porte 1, constituent un cadre de la structure 3 de porte. Chacune des extrémités de l'âme 8 des poutres circonférentielles 4 est fixée sur la poutre longitudinale 5a d'extrémité correspondante.

La figure 2 est une coupe verticale de la porte 1 de la figure 1 et montre le profil des poutres longitudinales 5a, 5b ainsi que leur agencement par rapport au panneau extérieur 2. Chaque poutre longitudinale 5a, 5b est fixée au panneau extérieur 2 par ses deux barres d'appui 6.

La fixation des barres d'appui 6 sur le panneau extérieur 2 ferme l'ouverture de la poutre longitudinale 5a, 5b, de sorte que celle-ci constitue une forme creuse à profil fermé.

Dans l'exemple des figures 1 et 2, la porte 1 comprend deux types de poutres longitudinales : des poutres à section constante 5a et des poutres particulières 5b qui sont dites « à section évolutive ».

Les poutres longitudinales 5a à section constante sont des profilés trapézoïdaux ouverts dont l'ouverture est tournée vers le panneau extérieur 2. Autrement dit, ces poutres 5a sont des cylindres dont la courbe directrice est une forme trapézoïdale qui est ouverte au niveau du grand côté du trapèze. L'ouverture des poutres 5a est close par la face interne du panneau extérieur 2 sur laquelle est fixée la poutre longitudinale 5a correspondante.

Les poutres longitudinales 5a à section constante présentent des parois de flanc 11 planes et des parois de sommet 7 également planes.

Les poutres longitudinales 5b à section évolutive présentent la même forme de section que les poutres 5a à section constante, et leur ouverture est également tournée vers le panneau extérieur 2. Les poutres longitudinales 5b à section évolutive sont ainsi des profilés trapézoïdaux ouverts dont l'ouverture est tournée vers le panneau extérieur 2. Autrement dit, ces poutres 5b sont des cylindres dont la courbe directrice est une forme trapézoïdale qui est ouverte au niveau du grand côté du trapèze. L'ouverture des poutres 5b est close par la face interne du panneau extérieur 2 sur laquelle est fixée la poutre longitudinale 5b correspondante, de sorte que l'intérieur de la poutre 5b ne soit pas accessible. Cependant, pour les poutres 5b, cette section évolue le long de la poutre. La section des poutres 5b augmente en direction du milieu de la poutre. La section 5b est dite « en augmentation » car une section de cette poutre 5b à proximité du milieu de la poutre présente une aire supérieure à celle d'une section de la poutre à proximité des extrémités de la poutre. Autrement dit, la forme qui est délimitée par le contour de la poutre 5b, dans un plan de section perpendiculaire à la direction dans laquelle s'étend la poutre 5b (dans cet exemple, un trapèze), présente une aire plus importante dans un plan de section situé vers le milieu de la poutre que dans un plan de section situé vers les extrémités de la poutre.

Plus précisément :
- la paroi de sommet 7 est bombée en direction du milieu de la poutre, c'est-à-dire que la hauteur de la paroi de sommet 7 (par rapport au panneau extérieur 2) est plus importante au milieu de la poutre qu'aux extrémités de la poutre ;
- les parois de flanc 11 sont également bombées en direction du milieu de la poutre, c'est-à-dire que l'écartement entre deux parois de flanc 11 d'une même poutre 5b est plus important au milieu de la poutre qu'au niveau de ses extrémités.

Malgré le caractère bombé de la paroi de sommet 7, la poutre longitudinale 5b s'interface efficacement avec les poutres circonférentielles 4 en offrant une portion de surface plane aux extrémités de la poutre 5b pour la fixation du rebord de renfort 10 des poutres circonférentielles 4 sur la poutre longitudinale 5b.

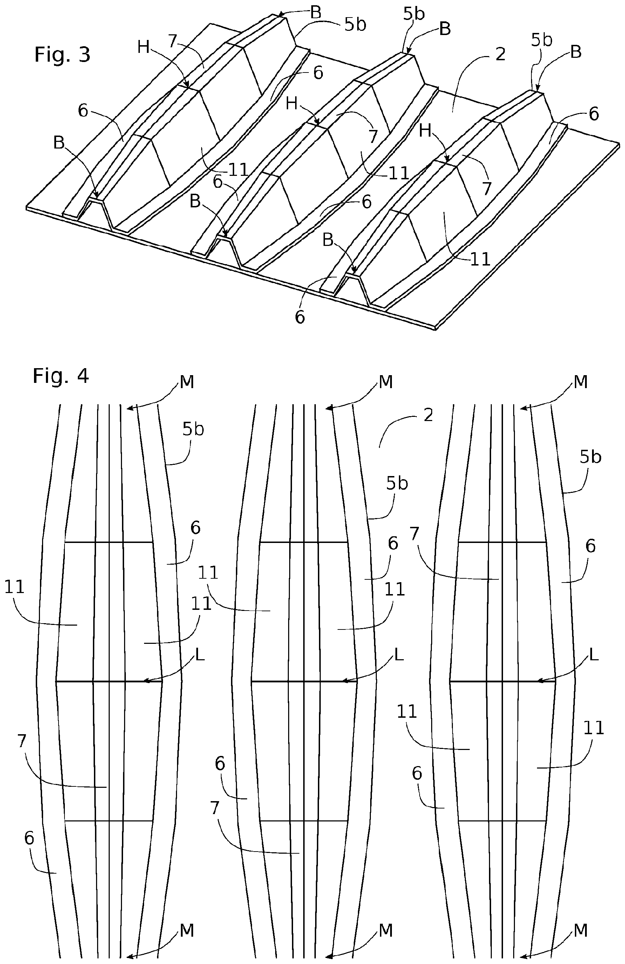

La figure 3 est une représentation partielle d'une porte 1 telle que la porte des figures 1 et 2, dans une variante où cette porte 1 comprend trois poutres longitudinales 5b à section évolutive. Seule une portion du panneau extérieur 2 a été représentée et les autres éléments de la porte n'ont pas été représentés afin de montrer uniquement les poutres longitudinales 5b à section évolutive en perspective.

Chaque paroi de sommet 7 des poutres 5b présente une zone culminante H qui est le point le plus haut de la poutre 5b, et deux zones basses B à chacune des extrémités de la poutre 5b, qui sont les points les plus bas de la poutre 5b. Ces zones sont qualifiées de culminantes (hautes) et basses en référence à la distance séparant la paroi de sommet 7 du panneau extérieur 2. Ainsi, la zone H d'une poutre 5b est située à une distance maximale du panneau extérieur 2 tandis que les deux zones B sont situées à une distance minimale du panneau extérieur 2. Entre chacune des zones basses B et culminantes H, la paroi de sommet 7 s'étend obliquement en s'éloignant du panneau extérieur 2.

La poutre 5b présente ainsi une dimension en augmentation des extrémités de la poutre vers le milieu de la poutre, le long d'une direction Y qui est perpendiculaire au panneau extérieur 2, c'est-à-dire que la poutre présente une variation de la distance entre la paroi de sommet 7 et le panneau extérieur 2 pour différentes positions le long de la poutre 5b. La poutre 5b présente également une dimension en augmentation des extrémités de la poutre vers le milieu de la poutre, le long d'une direction Z qui est perpendiculaire à la direction Y, c'est-à-dire que la poutre présente une variation de la distance entre ses deux parois de flanc 11 pour différentes positions le long de la poutre 5b.

La figure 4 est une vue de dessus des poutres 5b de la figure 3 et illustre le caractère bombé des parois de flanc 11.

La variation de section des poutres 5b dans la direction Z a pour conséquence une forme courbe (voir figure 4) des barres d'appui 6. Les parois de flanc 11 présentent une zone L culminante au milieu de la poutre, pour laquelle l'écartement entre les deux parois de flanc 11 est maximal, ainsi que deux zones de resserrement M dans lesquelles les deux parois de flanc 11 présentent un écartement minimal. Entre les zones M de largeur minimale et les zones L de largeur maximale, les parois de flanc 11 divergent depuis chaque extrémité de la poutre en direction du milieu de la poutre correspondant à la zone L.

La variation de section des poutres 5b peut être réalisée par tronçon, telle qu'illustrée aux figures 3 et 4, ou de manière continue et régulière.

Chaque poutre longitudinale 5b à section évolutive présente ainsi une section maximale au milieu de la poutre correspondant à :
- une distance maximale, selon la direction Y, entre le panneau extérieur 2 et la paroi de sommet 7 ;
- un écartement maximal, selon la direction Z, entre les deux parois de flanc 11.

À partir de cette zone de section maximale, chaque poutre 5b voit sa section diminuer au fur et à mesure que l'on s'éloigne du milieu de la poutre pour aboutir à une section minimale selon les deux directions perpendiculaires Y, Z à chacune des extrémités de la poutre.

Le phénomène de cloquage dû à la pressurisation de la cabine est ainsi évité et les poutres longitudinales 5b à section évolutive peuvent être disposées à tout endroit de la porte d'aéronef qui serait soumise à des phénomènes de cloquage en conséquence par exemple d'un allègement de la structure de porte 3 ou d'une réduction d'épaisseur du panneau extérieur 2.

Des variantes de réalisation de la porte d'aéronef peuvent être mises en oeuvre sans sortir du cadre de l'invention telle que définie dans les revendications. Notamment, toutes les poutres longitudinales d'une porte d'aéronef peuvent être constituées de poutres 5b à section évolutive.

Dans le présent exemple, pour les poutres à section évolutive, la zone de plus grande section est sensiblement le double des sections d'extrémité de la poutre. D'autres rapports de variation de la section des poutres peuvent être mises en oeuvre pour être ajustées à un agencement particulier de porte d'aéronef ou de matériaux. De plus, la section évolutive peut être mise en oeuvre conjointement à un changement de profil de la section. Par exemple, la paroi de sommet 7 peut être plane aux extrémités de la poutre et son profil peut varier vers un profil demi-rond en allant vers la zone de plus grande section.

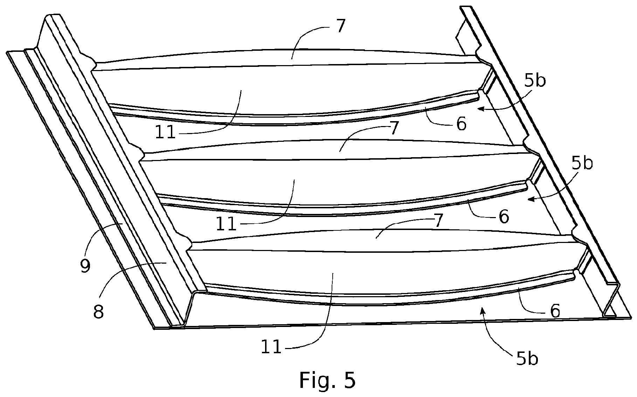

Dans l'exemple relatif aux figures 3 et 4, les poutres 5b à section évolutive présentent une forme prismatique, l'évolution de la section étant réalisée par des surfaces planes. La figure 5 illustre une variante dans laquelle, comme sur la figure 1, la variation de section des poutres 5b à section évolutive peut être réalisée par des surfaces courbes. Selon cette variante, l'évolution longitudinale des caractéristiques de la section n'est pas linéaire, les parois de sommet 7 et les parois de flanc 11 présentant ainsi des formes qui ne sont pas planes.

## Revendications

1. Porte de cabine pressurisée d'aéronef, comportant un panneau extérieur (2) et une structure de porte (3) qui comprend :
- deux poutres circonférentielles (4) fixées sur les rebords latéraux de la porte ;
- une pluralité de poutres longitudinales (5a, 5b) disposées sensiblement perpendiculairement entre les poutres circonférentielles (4) et fixées sur le panneau extérieur (2), chaque poutre longitudinale (5a, 5b) s'étendant d'une poutre circonférentielle (4) à l'autre, et chaque poutre longitudinale (5a, 5b) comportant : une première extrémité venant au contact de l'une des poutres circonférentielles (4) ; et une seconde extrémité qui vient au contact de l'autre poutre circonférentielle (4) ;
chaque poutre longitudinale (5a, 5b) étant 2. esb un profilé ouvert dont l'ouverture est tournée vers le panneau extérieur (2), cette ouverture étant close par la face interne du panneau extérieur (2) sur laquelle est fixée la poutre longitudinale (5a, 5b), **caractérisée en ce qu'** au moins une poutre longitudinale (5b) est une poutre longitudinale à section variable présentant, selon deux directions (Y, Z) perpendiculaires à la direction dans laquelle s'étend la poutre longitudinale (5b), une section en augmentation des extrémités (B, M) de la poutre vers le milieu (H, L) de la poutre, la poutre longitudinale (5b) à section variable présentant deux barres d'appui (6) fixées sur le panneau extérieur (2), ces barres d'appui (6) s'étendant sur toute la longueur de la poutre longitudinale (5b), de part et d'autre de ladite ouverture, ces deux barres d'appui étant recourbées et présentant chacune une concavité tournée vers la concavité de l'autre barre d'appui (6).

2. Porte selon la revendication 1, **caractérisée en ce que** la poutre longitudinale (5b) à section variable comporte deux parois de flanc (11) s'étendant obliquement l'une vers l'autre à partir des deux barres d'appui (6), ces deux parois de flanc (11) étant recourbées et présentant chacune une concavité tournée vers la concavité de l'autre paroi de flanc (11).

3. Porte selon la revendication 2, **caractérisée en ce que** chaque barre d'appui (6) est constituée par un pli d'une des parois de flanc (11).

4. Porte selon l'une des revendications 1 à 3, **caractérisée en ce que** la poutre longitudinale (5b) à section variable comporte une paroi de sommet (7), opposée aux barres d'appui (6), dont la largeur, mesurée dans un plan perpendiculaire à l'axe longitudinal de la poutre (5b), est inférieure ou égale à la distance minimale séparant les deux barres d'appui (6).

5. Porte selon la revendication 4, **caractérisée en ce que** la paroi de sommet (7) est une surface recourbée dont la concavité est tournée vers le panneau extérieur (2).

6. Porte selon l'une quelconque des revendications précédentes, **caractérisée en ce que** la structure de porte (3) comprend un cadre formé des poutres circonférentielles (4) et de deux poutres longitudinales (5a, 5b) situées aux extrémités des poutres circonférentielles (4).

7. Porte selon l'une quelconque des revendications précédentes, **caractérisée en ce que** la poutre longitudinale (5b) à section variable présente une dimension en augmentation des extrémités (B, M) de la poutre vers le milieu (H, L) de la poutre, selon les deux directions (Y, Z) perpendiculaires à la direction dans laquelle s'étend la poutre longitudinale (5b).

## Patentansprüche

1. Luftfahrzeugdruckkabinentür, umfassend eine Außenplatte (2) und eine Türstruktur (3), die aufweist:
- zwei Umfangsträger (4), die an den Seitenrändern der Tür befestigt sind;
- eine Vielzahl von Längsträgern (5a, 5b), die im Wesentlichen senkrecht zwischen den Umfangsträgern (4) angeordnet und an der Außenplatte (2) befestigt sind, wobei sich jeder Längsträger (5a, 5b) von einem Umfangsträger (4) zu dem anderen erstreckt und jeder Längsträger (5a, 5b) umfasst: ein erstes Ende, das mit einem der Umfangsträger (4) in Kontakt kommt; und ein zweites Ende, das mit dem anderen Umfangsträger (4) in Kontakt kommt;
wobei jeder Längsträger (5a, 5b) ein offenes Profil ist, dessen Öffnung der Außenplatte (2) zugewandt ist, wobei diese Öffnung durch die Innenseite der Außenplatte (2) geschlossen ist, an welcher der Längsträger (5a, 5b) befestigt ist,
**dadurch gekennzeichnet, dass** mindestens ein Längsträger (5b) ein Längsträger mit variablem Querschnitt ist, der in zwei Richtungen (Y, Z) senkrecht zu der Richtung, in der sich der Längsträger (5b) erstreckt, eine Querschnittsvergrößerung von den Enden (B, M) des Trägers zu der Mitte (H, L) des Trägers hin aufweist, wobei der Längsträger (5b) mit variablem Querschnitt zwei Stützstangen (6) aufweist, die an der äußeren Platte (2) befestigt sind, wobei sich diese Stützstangen (6) über die gesamte Länge des Längsträgers (5b) beiderseits der Öffnung erstrecken, wobei diese beiden Stützstangen gekrümmt sind und jeweils eine der Konkavität der anderen Stützstange (6) zugewandte Konkavität aufweisen.

2. Tür nach Anspruch 1, **dadurch gekennzeichnet, dass** der Längsträger (5b) mit variablem Querschnitt zwei Flankenwände (11) aufweist, die sich von den beiden Stützstangen (6) schräg zueinander erstrecken, wobei diese beiden Flankenwände (11) gekrümmt sind und jeweils eine der Konkavität der anderen Flankenwand (11) zugewandte Konkavität aufweisen.

3. Tür nach Anspruch 2, **dadurch gekennzeichnet, dass** jede Stützstange (6) von einem Knick einer der Seitenwände (11) dargestellt wird.

4. Tür nach einem der Ansprüche 1 bis 3, **dadurch gekennzeichnet, dass** der Längsträger (5b) mit veränderlichem Querschnitt eine den Stützstangen (6) gegenüberliegende Scheitelwand (7) aufweist, deren Breite, gemessen in einer Ebene senkrecht zu der Längsachse des Trägers (5b), kleiner oder gleich dem die beiden Stützstangen (6) trennenden Minimalabstand ist.

5. Tür nach Anspruch 4, **dadurch gekennzeichnet, dass** die Scheitelwand (7) eine gekrümmte Fläche ist, deren Konkavität der Außenplatte (2) zugewandt ist.

6. Tür nach einem der vorhergehenden Ansprüche, **dadurch gekennzeichnet, dass** die Türstruktur (3) einen aus den Umfangsträgern (4) und zwei an den Enden der Umfangsträger (4) angeordneten Längsträgern (5a, 5b) gebildeten Rahmen aufweist.

7. Tür nach einem der vorhergehenden Ansprüche, **dadurch gekennzeichnet, dass** der Längsträger (5b) mit variablem Querschnitt in den beiden Richtungen (Y, Z) senkrecht zu der Richtung, in der sich der Längsträger (5b) erstreckt, eine Abmessungsvergrößerung von den Enden (B, M) des Trägers zu der Mitte (H, L) des Trägers hin aufweist.

## Claims

1. An aircraft pressurized cabin door, comprising an exterior panel (2) and a door structure (3) which comprises:
- two circumferential beams (4) attached to the side edges of the door;
- a plurality of longitudinal beams (5a, 5b) arranged substantially perpendicularly between the circumferential beams (4) and attached to the exterior panel (2), each longitudinal beam (5a, 5b) extending from one circumferential beam (4) to the other, and each longitudinal beam (5a, 5b) comprising: a first end coming into contact with one of the circumferential beams (4); and a second end which comes into contact with the other circumferential beam (4);
each longitudinal beam (5a, 5b) being an open section whose opening faces the exterior panel (2), this opening being closed by the internal face of the exterior panel (2) on which the longitudinal beam (5a, 5b) **characterized in that** is attached, at least one longitudinal beam (5b) is a variable-section longitudinal beam having, in two directions (Y, Z) perpendicular to the direction in which the longitudinal beam (5b) extends, a cross section that increases from the ends (B, M) of the beam towards the middle (H, L) of the beam, the variable-section longitudinal beam (5b) having two support bars (6) attached to the exterior panel (2), these support bars (6) extending over the entire length of the longitudinal beam (5b), on either side of said opening, these two support bars being curved and each having a concavity facing the concavity of the other support bar (6).

2. The door as claimed in claim 1, **characterized in that** the variable-section longitudinal beam (5b) comprises two side walls (11) extending obliquely towards each other from the two support bars (6), these two side walls (11) being curved and each having a concavity facing the concavity of the other side wall (11).

3. The door as claimed in claim 2, **characterized in that** each support bar (6) is formed by a fold of one of the side walls (11).

4. The door as claimed in one of claims 1 to 3, **characterized in that** the variable-section longitudinal beam (5b) comprises a top wall (7), opposite the support bars (6), the width of which, measured in a plane perpendicular to the longitudinal axis of the beam (5b), is less than or equal to the minimum distance separating the two support bars (6).

5. The door as claimed in claim 4, **characterized in that** the top wall (7) is a curved surface, the concavity of which faces the exterior panel (2).

6. The door as claimed in any one of the preceding claims, **characterized in that** the door structure (3) comprises a frame formed by the circumferential beams (4) and two longitudinal beams (5a, 5b) located at the ends of the circumferential beams (4).

7. The door as claimed in any one of the preceding claims, **characterized in that** the variable-section longitudinal beam (5b) has a dimension which increases from the ends (B, M) of the beam towards the middle (H, L) of the beam, in the two directions (Y, Z) perpendicular to the direction in which the longitudinal beam (5b) extends.
